# EUROPEAN PATENT APPLICATION

(11) **EP 3 089 050 A1**
(43) Date of publication of application: **02.11.2016**
(21) Application number: 15165289.8
(22) Date of filing: 27.04.2015
(51) Int. Cl.: G06F 17/30

(54) **IMPROVEMENTS RELATING TO SEARCH ENGINES**

(71) Applicant: Dynamic Procurement Holdings Limited, Milton Keynes MK9 1EA (GB)
(72) Inventor: YOUNG, Julian, Buckinghamshire MK9 1EA (GB); BASQUILLE, Keiron, Buckinghamshire MK9 1EA (GB)
(74) Representative: Richardson, Mark Jonathan

(57) **Abstract**

A user-configurable search engine system (100) for executing a complex multi-parameter data search in accordance with a search query specified at a remotely-located user terminal (101) is described. The search engine system comprises: a plurality of stored query construction components (106, 107) including a plurality of different user-configurable query templates (106); a query construction module (310) for providing user access to the query construction components (106,106a) enabling a user at the remotely-located terminal (101) to construct a complex user-defined multi-parameter search query (104) having a bespoke user-selected format; a query pre-processing module (110) for transmitting the user-defined multi-parameter query to a plurality of content providers (120); a response collator (330) for collating a plurality of received content responses (108) to the multi-parameter query (104) from the plurality of content providers (120); wherein the plurality of received content responses correspond in format to the bespoke user-defined format of the multi-parameter query (104) and the response collator (330) is arranged to populate a content database (140) with the plurality of content responses (108) in the user-selected format; a database query engine (320) for searching the content database (140) for content responses (108) matching the user-defined multi-parameter query (104) and for returning to the user terminal (101) a set of results of the content responses corresponding to the multi-parameter query (104) that are ranked in order of degree of matching to the query (104).

## Description

### Field of the Invention

The present invention concerns improvements relating to search engines and more particularly, though not exclusively, to a system including an improved adaptive search engine for use in searching where there are multiple-parameter complicated search queries and the results need to be highly accurate.

### Background

Search engines have been available in different forms for many years. They are often embodied as a software program which has the ability to search a data store relatively quickly and to retrieve a list of content in that data store which is relevant to a search query. A search engine often has a front end which is an interface to the user where they can type in free-form text and that text can be used to execute a search for relevant data stored in the database. One of the most well-known search engines is Google^{®} which is an Internet search engine.

Internet search engines are often used to search for content widely distributed over the Internet. Rather than searching the whole of the internet each time a search is invoked, the search is carried out on a database of searchable page entries which are constantly being updated by software devices called web crawlers. These web crawlers (also known as Internet bots) browse the Internet for the purposes of web indexing and the results are stored in a database of indexes. These indices are often stored as searchable metadata. An internet search engine allows a simple text input as a search query and uses that text query to search the metadata which is stored in the database of indices. The search engine uses the text search query and searches for metadata corresponding to the text search query to derive a ranked list of results. The ranking can be carried out on a variety of supporting evidence parameters, for example location of the search requester or their historic search context. These supporting evidence parameters can be used to filter results or assist in ranking in addition to the main ranking percentage matching of search term to metadata in the index of the web page. The search engine then displays the ranked list of search results on search engine results pages (SERPs).

The key advantage of such simple free-text searches is that the search query can be determined by the person creating the search query rather than be of a predetermined format. This makes it easier for users to search as they are not constrained to any specific format.

Search engines are also known for conducting searches using more complicated queries. For example, rather than a query being a simple text field, the search query can be comprised of a structured form with a plurality of parameters which each need to be specified for the search to be carried out. The search engine then carries out a search for the best matching results in the search database of structure searchable data by comparing each specific search parameter of the search query form with a particular pre-matched field of the searchable data. To arrive at a ranked set of results, certain fields may be weighted higher than others and an overall weighted score can determine the overall ranking of the results. Examples of such complex multi-parameter search engines are seen in internet comparison websites for insurance products.

Such multi-parameter searches enable more complex search queries to be created and more specific results to be obtained than simple text query searches. This is because rather than having a free text searching of all stored metadata for each specified free text parameter (if more than one is provided), each specified search parameter is only searched against a subset of relevant data and this provides a greater probability of a relevant result across all of the multiple parameters. In other words, the structure of the stored searchable data matches the structure of the search query such that each parameter is only searched against parameter relevant data. The results of this type of searching are more relevant to the search request as compared to free text field searching.

However, known multi-parameter searches typically conduct the searches on static databases which are updated periodically. What this means is that the search is only conducted against a set of static data which has previously been obtained and put into the database in a predetermined format before the search query has been created. Not only does this mean that the data can be out of date, but also the search query needs to be constrained to the predetermined format of the searchable data stored in the data store. Such constraints mean that the advantage of the user specifying precisely what they are looking for, as is available using free text searching, is lost and the results are often a compromise by the searcher having to adopt the predetermined format of the data stored in the search database.

It is desired to overcome at least some of the above described problems with the prior art. More specifically, though not exclusively, the present invention can be considered to be directed to the technical problem of how to carry out a multi-parameter search which requires the searchable data to be in a specified format without unduly constraining the search query into a predetermined format.

### Summary of the Invention

According to one aspect of the present invention there is provided a user-configurable search engine system for executing a complex multi-parameter data search in accordance with a search query specified at a remotely-located user terminal, the search engine system comprising: a plurality of stored query construction components including a plurality of different user-configurable query templates; a query construction module for providing user access to the query construction components enabling a user at the remotely-located terminal to construct a complex user-defined multi-parameter search query having a bespoke user-selected format; a query pre-processing module for transmitting the user-defined multi-parameter query to a plurality of content providers; a response collator for collating a plurality of received content responses to the multi-parameter query from the plurality of content providers; wherein the plurality of received content responses correspond in format to the bespoke user-defined format of the multi-parameter query and the response collator is arranged to populate a content database with the plurality of content responses in the user-selected format; a database query engine for searching the content database for content responses matching the user-defined multi-parameter query and for returning to the user terminal a set of results of the content responses corresponding to the multi-parameter query that are ranked in order of degree of matching to the query.

The above-described aspect of the present invention enables the user to construct effectively a bespoke data query in a relatively easy manner using one or more of the different user-configurable query templates and query construction components. This database query is then used by the search engine to populate a database of potential results in a format that conforms to that user-defined query format, such that when the user query is actually run by the database query engine, the set of results returned to the user will have a far higher degree of matching and relevance than was otherwise possible on a static database with a predetermined data format. This enables complex searches to be carried out with results which are highly relevant to the exact form of data query required by the user. This in turn leads to a far more accurate set of results than is possible with conventional search engines.

One key difference is the order in which the search steps are carried out. In the prior art search engine systems, the content is obtained before the search query is formulated. This naturally relies on use of a predetermined format before the query is specified by the user. In the present invention, the search query is specified first and only then is the content obtained from the content providers to populate the content database to which the query will be applied. The present invention sacrifices speed of results generation but in turn gets a far more accurate (better matching across all parameters) set of responses where the search query is complex in that it has multiple specific parameters.

Also another advantage of the present invention is that the search is adaptive and in real time. Data provided by the content providers is responsive to the search query and so information that may not previously have been provided as it was considered to be of little relevance by the content provider, can in response to a specific query be provided to enable even the most obscure queries for data to yield relevant results.

Another advantage that the present invention provides is that the data which is returned by the search is not likely to be out of date. This is because the content database is populated in response to a user-defined query being received rather than the other way around. As mentioned before, it is accepted that this can slow down the process somewhat of the search engine returning the results. However, the accuracy of the results and the fact that they are based on current data, which is not out-of-date, provides a significant benefit leading to a higher likelihood of the search results being of the highest possible relevance to the complex multi-parameter search query.

The term 'multi-parameter query' or 'multi-parameter search query' as used herein refers to a query having at least six parameters and preferably more than fifteen parameters. Typically the number of parameters in a complex multi-parameter search query are in the order of 30-60. The level of complexity increases exponentially with increasing numbers of parameters as the number of specific combinations of parameters is increased exponentially.

The present invention also extends to a method of executing a complex multi-parameter data search in accordance with a query, the method comprising: providing a plurality of stored query construction components including a plurality of different user-configurable query templates; providing user access to the query construction components to enable a user at a remotely-located user terminal to construct a user-defined multi-parameter search query having a bespoke user-selected format; transmitting the user-defined multi-parameter query to a plurality of content providers; collating a plurality of received content responses to the multi-parameter query from the plurality of content providers; wherein the plurality of received responses correspond in format to the bespoke user-defined format of the multi-parameter query and the collating step includes populating a content database with the plurality of content responses in the user-selected format; searching the content database for content responses matching the user-defined multi-parameter query; and returning to the user terminal a set of results of the content responses corresponding to the multi-parameter query that are ranked in order of degree of matching to the query.

### Brief Description of the Drawings

In order for the invention to be better understood, reference will be made, by way of example, to the accompanying drawings in which:
**Figure 1** is a schematic diagram block illustrating a user-configurable search engine system according to an embodiment of the present invention, and the environment in which the system operates;
**Figure 2** is a schematic block diagram showing the structure of a database of the search engine system of **Figure 1**;
**Figure 3** is a schematic block diagram showing the architecture of a search engine of the search engine system of **Figure 2**;
**Figure 4** is a flowchart illustrating a method of operation of the search engine system of Figure 1 according to an embodiment of the present invention;
**Figures 4a** to **4f** are screenshots of a graphical user interface generated by a website of **Figure 1** which show the different templates provided to the user terminal to enable relatively simple creation of a multi-parameter search query specification;
**Figures 4g** and **4h** are screenshots of a web pages which are provided to a content provider and a user of **Figure 1** as part of an alert which shows the current status of a pending multi-parameter search query specification;
**Figure 4i** is screenshot of a web page showing the results of the complex multi-parameter search query process as presented to the user of **Figure 1**;
**Figure 5** is a flowchart illustrating the actions taken by a content provider of **Figure 1** in responding to a broadcast of a multi-parameter search query specification by the search engine system;
**Figure 5a** is a screenshot of web page presented to the content provider of **Figure 1** when they are in the process of creating a response content specification to a broadcast multi-parameter search query specification;
**Figure 5b** is a schematic representation of a webpage generated by the website of Figure 1 showing a response content specification analysis result as seen by a content provider;
**Figure 6** is a schematic diagram block illustrating an overall architecture of a search engine system according to an alternative embodiment of the present invention;
**Figure 7** is a schematic block diagram showing the web server of the search engine system of **Figure 6** in greater detail;
**Figure 8a** is a schematic representation of a web page presented to an unregistered content provider of **Figure 6** showing different multi-parameter search query specifications which are presented as a result of a search on a geographical location;
**Figure 8b** is a schematic representation of a web page showing the details of a broadcast multi-parameter search query specification which is available to be responded to which has been selected from the plurality of different multi-parameter search query specifications shown in **Figure 8a**; and
**Figure 9** is a screenshot of web page presented to a registered content provider of **Figure 6** showing a posted multi-parameter search query specification which is available to be responded to.

### Detailed Description of Embodiments of the Invention

It is to be appreciated that the terms 'user' and 'user terminal' are used interchangeably within this specification. These terms are to be considered to mean a user working through a user terminal, which is connected to a communications network and which is to set up to instruct a complex multi-parameter search. Similarly, the terms 'content provider' and 'content provider terminal' are also used interchangeably within the following description. These terms are to be considered to mean a content provider working through a content provider terminal, which is connected to the communications network to provide content to the search engine system to enable the complex multi-parameter search to be carried out.

The following description provides details of the creation of a multi-parameter search query specification and how, for that multi-parameter search query specification, a best matching response content specification is determined from a plurality of response content specifications. However, the present embodiment is directed to a system and method in which multiple multi-parameter search query specifications are created each being unique to a specific user by having its own unique parameters and features. For each of these unique multi-parameter search query specifications, a complex multi-parameter search query process is conducted. Accordingly, the system and method of the present embodiment are designed to provide the ability for different users with different queries to use the system of the present embodiment in a relative simple manner to define bespoke multi-parameter search query specifications relatively easily through the use of query construction components including user-configurable multi-parameter templates which can also control how the best matching responses to the query are obtained but also in one embodiment how the automatic selection of the best matching response content specification will be carried out.

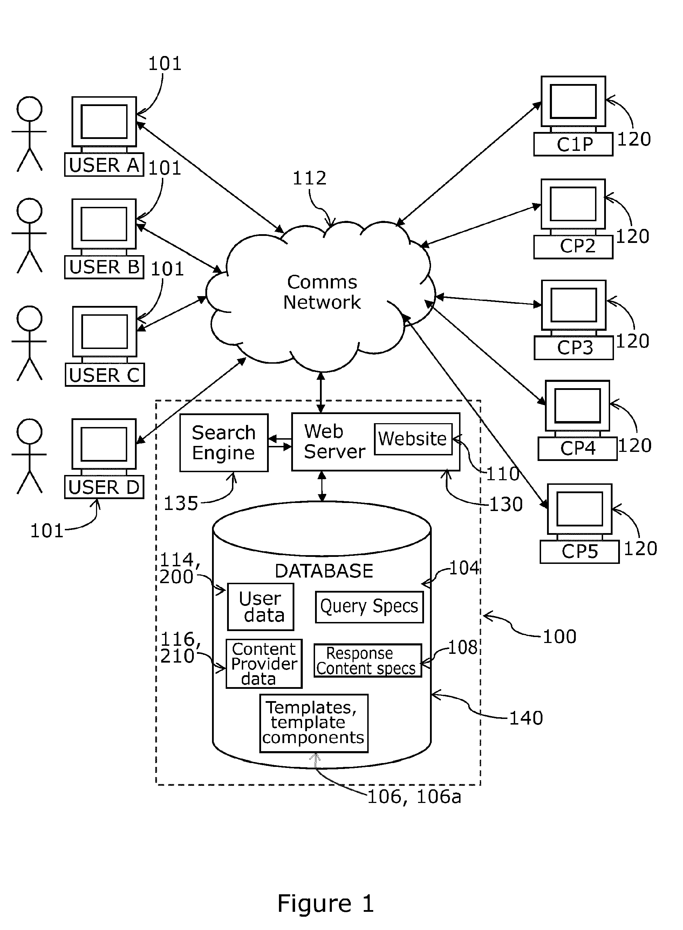

Referring now to **Figure 1**, a search engine environment 10 is now described. At the heart of the search engine environment 10 is a search engine system 100 embodying the present invention.

The search engine system 100 allows a user using a user terminal 101, to create a bespoke unique multi-parameter search query specification 104, by setting out a plurality of features (parameters) of the query and also a weighting scheme which can be applied to those features to make the search query bespoke to the user. The weighting can be applied to the results to help better rank the results or to enable the automatic selection of the highest scoring search result. In one non-limiting embodiment described herein the search is carried out for a service procurement specification, which has around 50 parameters which need to be specified for the search. However, it is to be appreciated that this example is non-limiting and complex multi-parameter searches in many other areas are also possible. In the service procurement search example described herein, the search query is for desired characteristics of required resources for a user and the weighting scheme, which is specified, outlines the importance of each characteristic that is used in the later selection process. The process in this embodiment is described as being automatic, but it is also possible for the results to be presented to the user for user selection in a similar manner to the presentation of conventional search engine results.

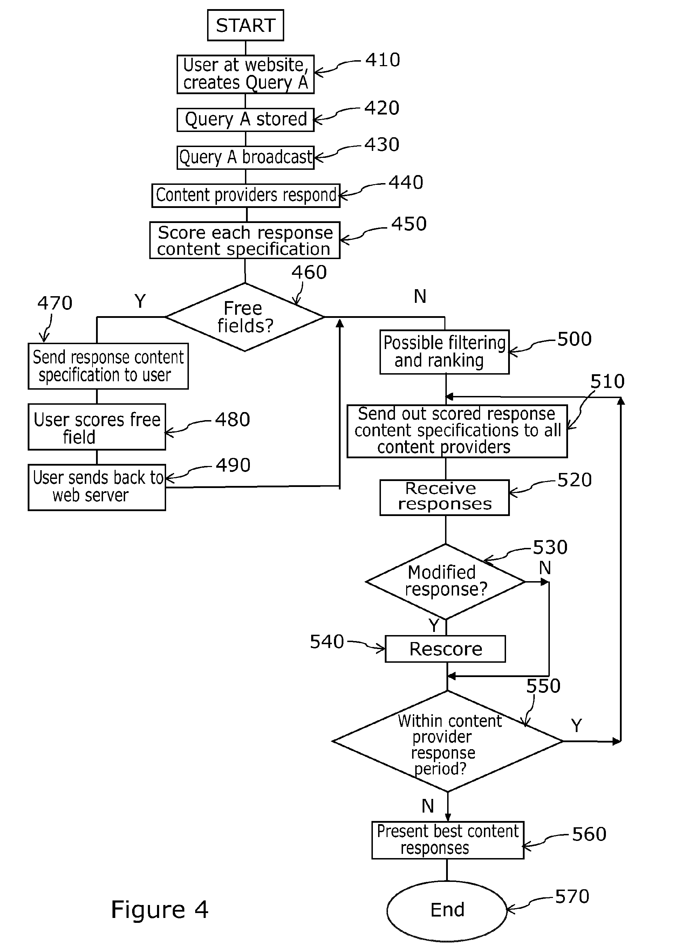

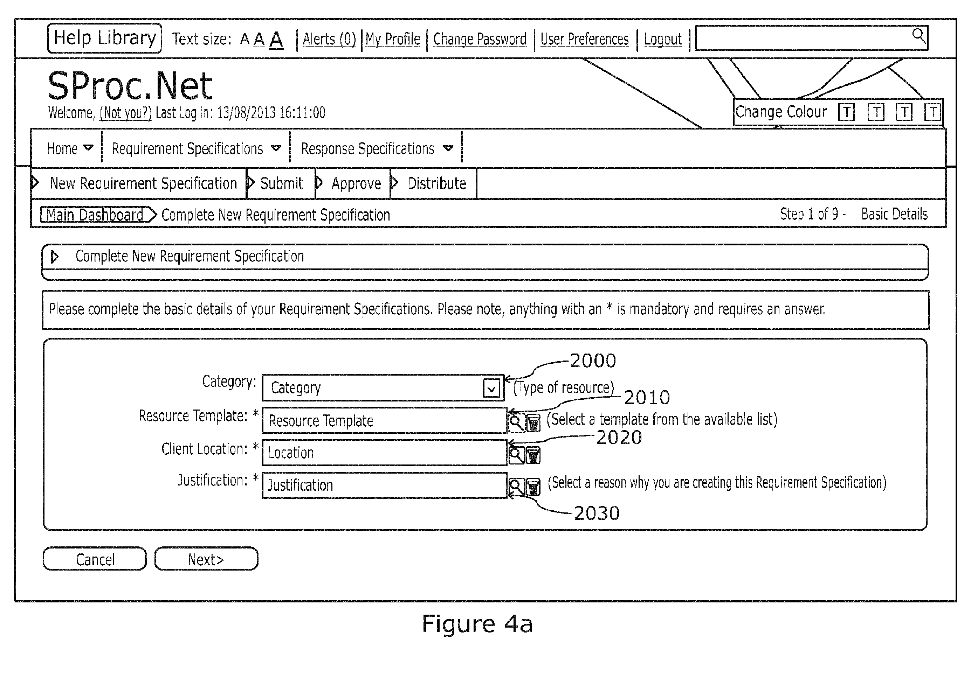

The creation of a multi-parameter search query specification 104 is made relatively easy for the user by the provision of a series of predetermined templates 106/template components 106a which act to assist the user in creating the multi-parameter search query specification 104 at their respective user terminal 102. The use of templates 106 and template components 106a to create a typical multi-parameter search query specification 104 will be described in more detail below, with reference to Figures 4a to 4f.

The search engine system 100 enables a plurality of content providers using content provider terminals 120, to receive each multi-parameter search query specification 104 and submit a response content specification 108 back to the search engine system 100 to best match the multi-parameter search query specification 104. These specifications 104, 108 are stored in the database 140. Also data about the users 101 is stored in the database 140 as user data 114 and data regarding the content providers 120 is stored in the database 140 as content provider data 116.

In the most preferred embodiments the multi-parameter queries are broadcast out to the content provider terminals and the terminals (computer systems of the content providers provided there) respond automatically to provide the content in the bespoke user-defined format back to the search engine system 100. This is the optimum solution as the time delay in getting the responses is minimised. However given that many different content providers have different systems, some of which are not able to respond automatically (thereby reducing time) the presently described embodiments illustrate a basic manual response system wherein the content provider submits a content response specification within a specified time period. In this regard each query specification has a response deadline for that content specification response (though in the preferred automatic response case the response deadline can be a number of seconds or minutes rather than days).

In the present embodiment, one or more user terminals 101 interface with the search engine system 100 via a communications network 112 which in this embodiment comprises the Internet, to access a website 110 which is provided by the web server 130. The search engine system 100 comprises a web server 130 providing the website 110, a search engine 135 and a database 140. The search engine system 100 also interfaces with one or more content provider terminals 120.

Each of the user terminals 101 and content provider terminals 120 can be realised as computer software or hardware that accesses and submits data to and from the search engine system 100. For example, the user terminals 101 and the content provider terminals 120 can be standalone computers such as Personal Computers (PCs) or laptop computers, mobile telecommunications devices such as smart phones or tablet computers, or even more complicated computer servers for content providers which may be linked to their inventory systems for example. In this embodiment, whichever form the device takes, it has a browser application (not shown) running on the terminal to access the webpages of the website 110 served by the web server 130.

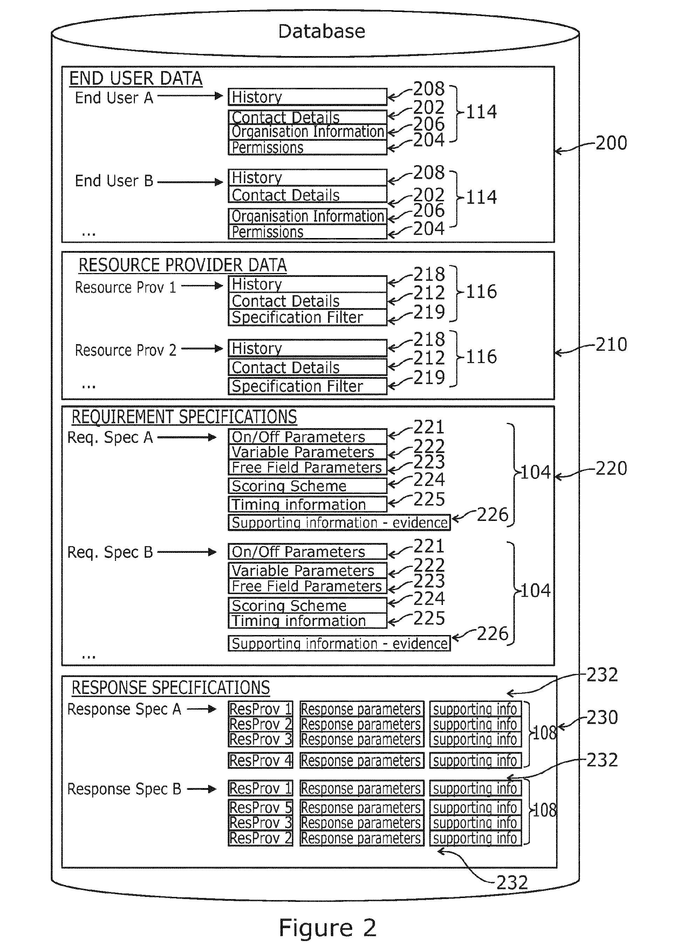

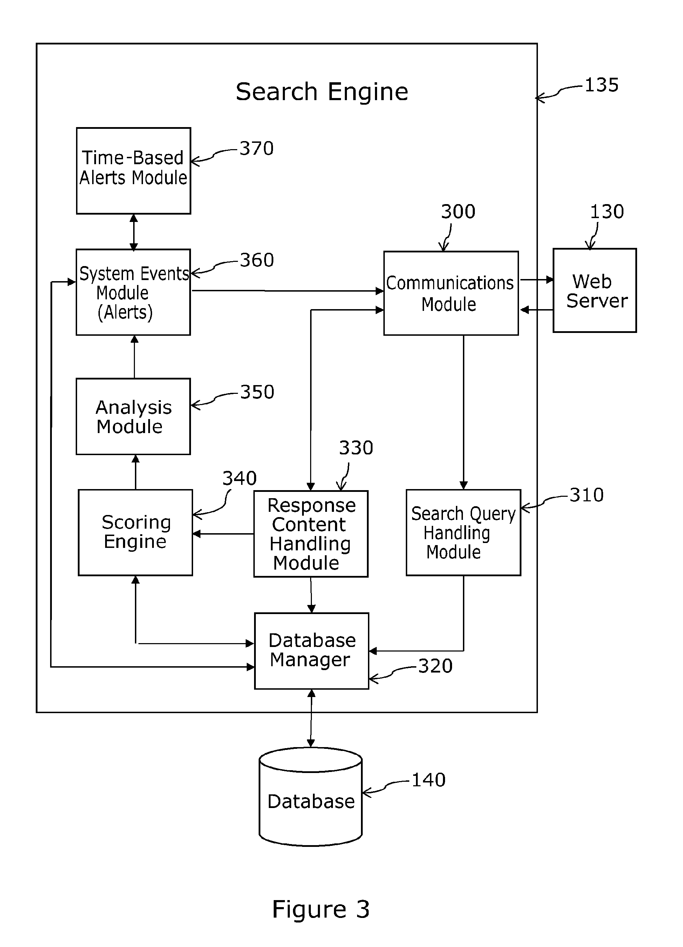

The web server 130 is also connected to the search engine 135 which functions to select a best match from a plurality of response content specifications 108 to a multi-parameter search query specification 104 using filtering and scoring techniques which will be described in detail later. The database 140, also provided in the search engine system 100, holds a variety of different types of data, as will be explained with more detail below, with reference to **Figure 2**. The component modules of the web server 130 which allow it to interface with both the website 110 and the database 140 will be described with more detail with reference to **Figure 3**.

Referring now to **Figure 2**, the data stored in the database 140 are organised into four different types of subjects, namely: user data 200 (also referred to as end user data); content provider data 210 (also referred to as resource provider data); query specification data 220 (also referred to as requirement specifications) and content provider data 230 (also referred to as response specifications). The user data 200 concerns users and includes information about each user. This user data 200, can include the contact details 202 of each user, permissions 204 that the user has specified, organisation information 206 regarding the client or organisation which the user represents and history information 208 on previous multi-parameter search query specifications 104 the user has submitted through the search engine system 100. The content provider data 210 concerns the content providers and includes specific information regarding each content provider 120. Similar to the user data 200, the content provider data 210 includes contact details 212 of each content provider, permissions 214 that the content provider 120 has specified, organisation information 216 regarding the entity which the content provider 120 represents and historical information 218 on previous response content specifications the content provider has submitted in response to a query through the search engine system 100. Furthermore, the content provider data 210 includes, for each specific content provider a specification filter 219 which has been set by the content provider 120. These specification filters 219 set out parameters which determine which types of multi-parameter search query specifications 104 the content provider 120 is prepared to be considered for matching against. For example, content provider A may not have any relevant content to provide for searches relating to content outside the UK. Therefore any multi-parameter specifications which define a parameter which concerns content relating to the US, would by way of the filter have already determined that Content Provider A will not be able to provide any meaningful response content specifications. In this way, the system can filter out certain content providers for specific types of multi-parameter search query specifications 104 and thereby simplify the subsequent multi-parameter search query process as well as making the search results more accurate.

The query specification data 220 describes the multi-parameter search query specifications 104 which include information on the various characteristics defining the multi-parameter search query specifications 104, such as on/off parameters 224, variable and free-field parameters 222, 223 set by the users via their user terminals 101, a weighting scheme 224, as well as timing information 225 such as action deadline dates and evidential information 226 for specific requirements set out in a multi-parameter search query specifications 104. The process of drafting a multi-parameter search query specifications 104 will be described in greater detail below, with reference to **Figures 4a** to **4f**. As can be seen in **Figure 2**, the response content specification data 230 includes a structure of parameters and evidential information for each response content specification 108, which is equivalent to the structure of parameters in the search query specification 104. This enables each parameter of the response content specification 108 to be matched as a response to each of the parameters of the multi-parameter search query specification 104. Any content provider documents 232 which are provided as supporting evidence are also stored with the response content specification 108.

The search engine 135 is now described in greater detail with reference to **Figure 3**. The search engine 135 comprises a communications module 300. The communications module 300 interfaces with the web server 130 and provides data to and receives information from user terminals 101 and content provider terminals 120. This information, which includes all of the data that has been described previously with reference to **Figure 2**, is provided to and received from the appropriate modules of the search engine 135.

The communications module 300 channels all the information pertinent to the multi-parameter search query specification 104 to the search query handling module 310. The search query handling module 310 processes that information and stores it in the database 140 via a database manager 320 (also known as a database query engine), which is connected to the database 140.

The communications module 300 is also configured in use to direct all information concerning the received response content specifications 108 to a response content specification handling module 330. The response content specification handling module 330 is connected to the database manager 320 for storing response content specification data to the database 140 in the bespoke user defined format in which it was received. Also the response content specification handling module 330 is coupled to the scoring engine 340 for processing the received response content specifications 108.

The scoring engine 340 provides the scored response content specifications 108 to an analysis module 350 and the scoring engine 340 is also connected to the database manager 320 for accessing multi-parameter search query specifications 104 and in particular, a scoring scheme applicable to a response content specification 108 currently under consideration. The analysis module 350 feeds the system events module 360, which is connected to the communications module 300. Accordingly, the results of any analysis can be communicated to both the users 101 and the content providers 120. The system events module 360 is also coupled directly with the database manager 320 to save the analysis results directly to the database 140 and also to retrieve any previously stored information which may be required for alerts, for example retrieving user contact details 202 or content provider contact details 212. Furthermore, the system events module 360 can also refer to stored permissions 204 to determine whether there are any restrictions from the user's view on the content providers who can be sent or access the user multi-parameter search query specification 104. Also, the system events module 360 accesses the specification filters 219 of the content providers to filter out those content providers 120 who have specified that they do not have content about certain types of search query specifications 104. These content providers do not receive the corresponding alerts. Similarly, a time-based alerts module 370 is provided connected to the system events module 360, which serves to provide alerts to users 104 and content providers 120 regarding time limits which have been set by the timing parameters 225, 2150 (see below) in the multi-parameter search query specification 104.

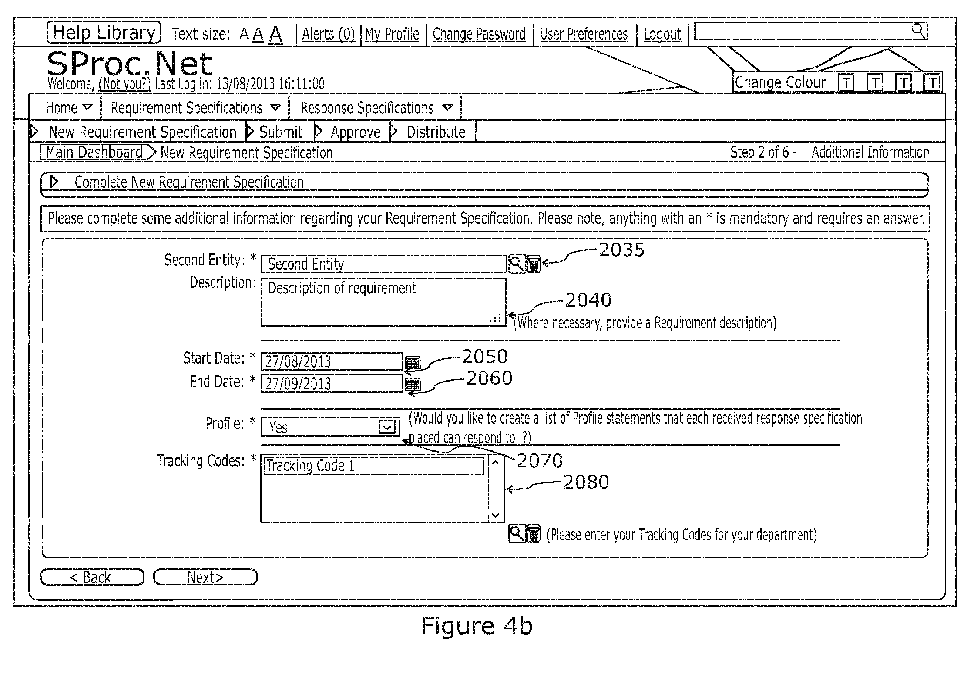

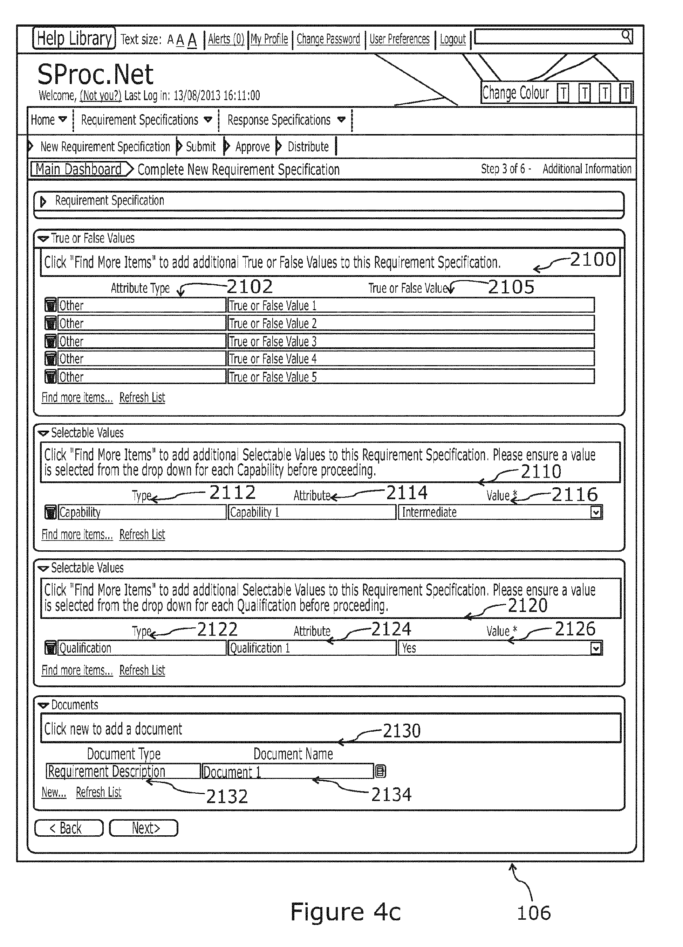

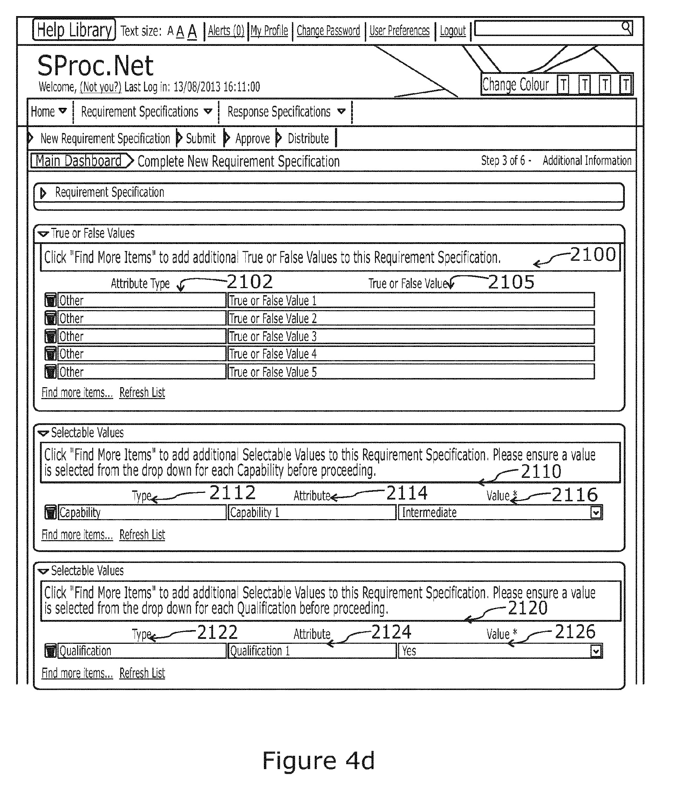

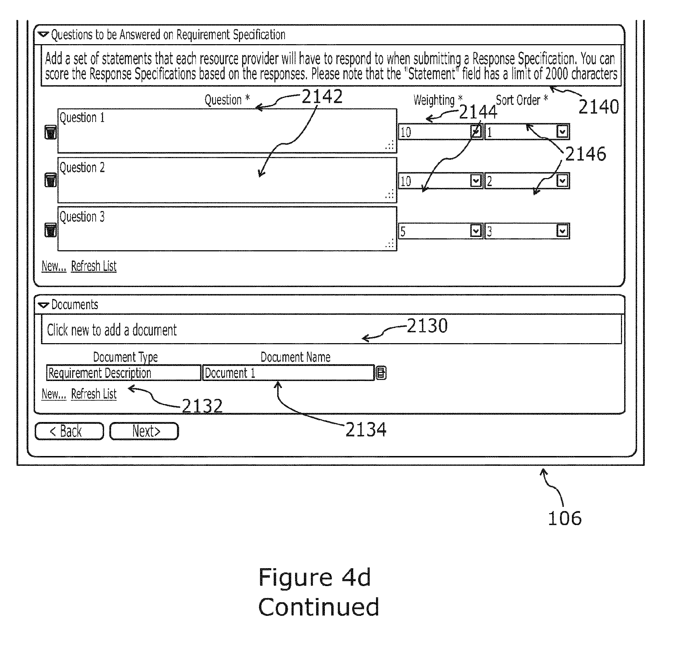

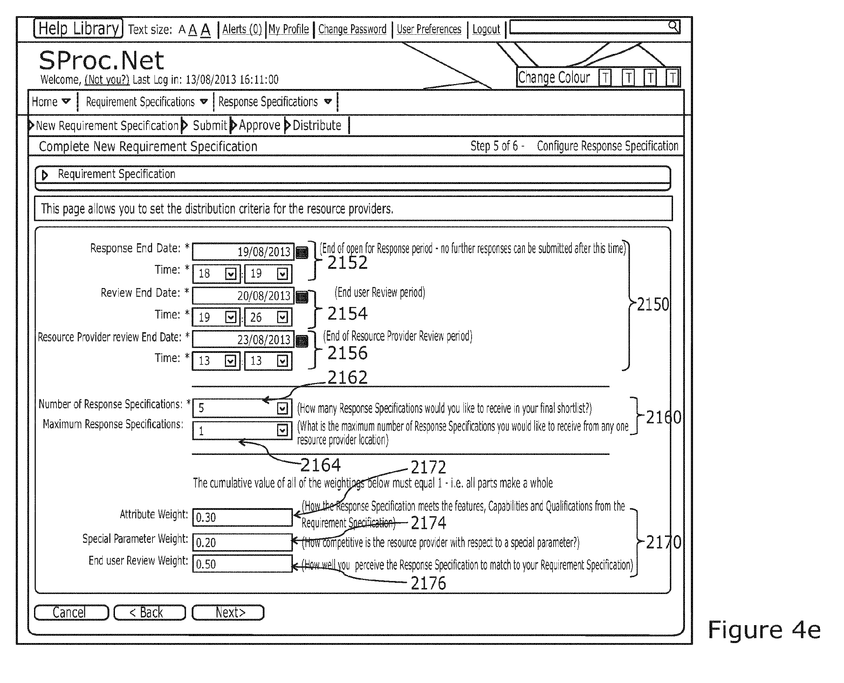

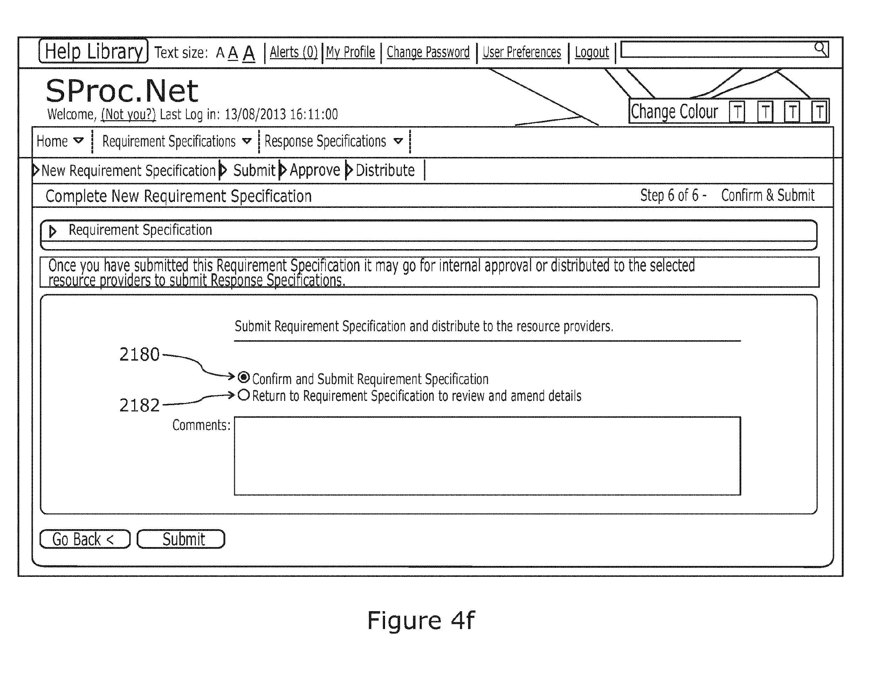

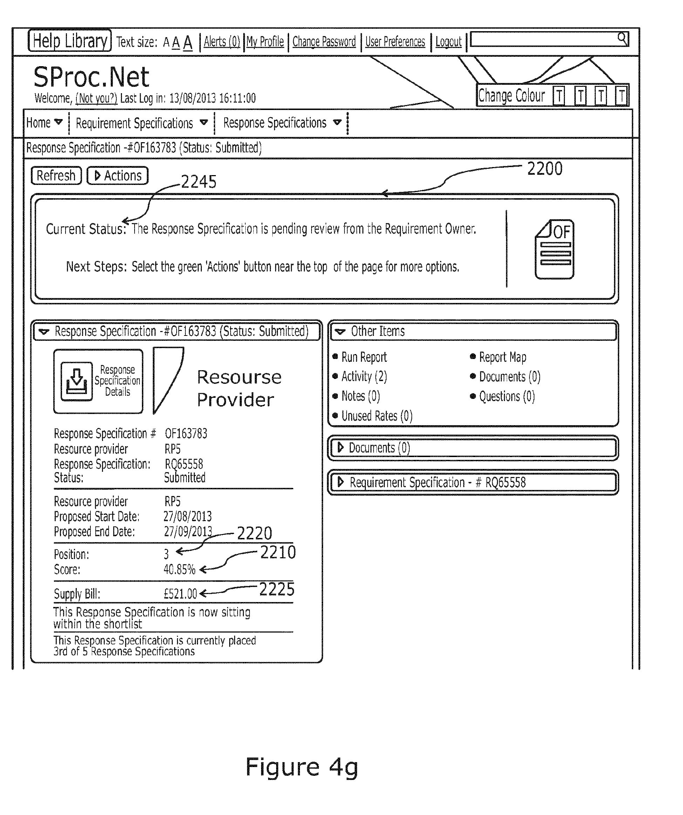

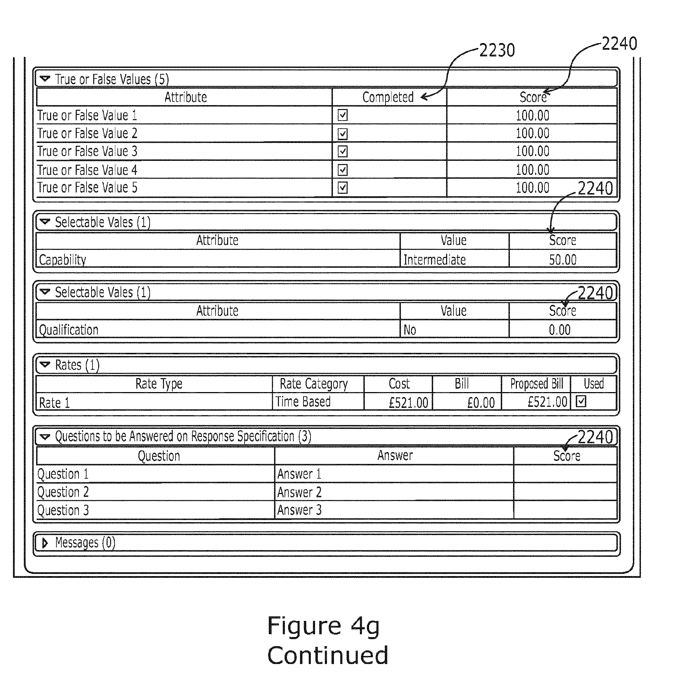

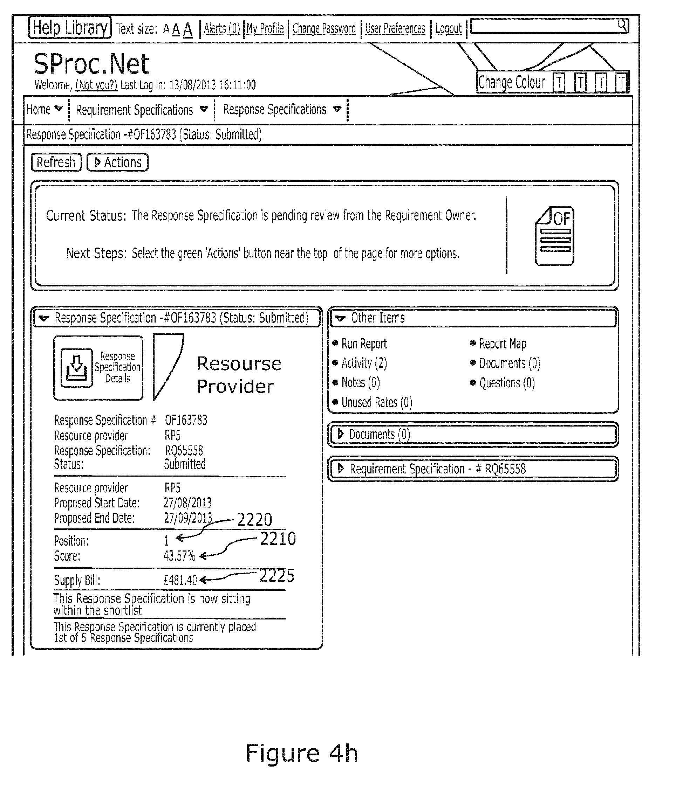

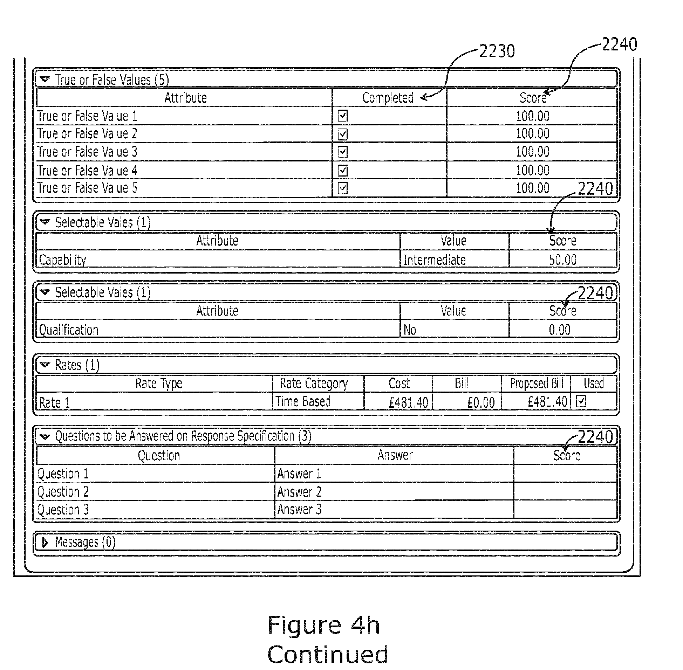

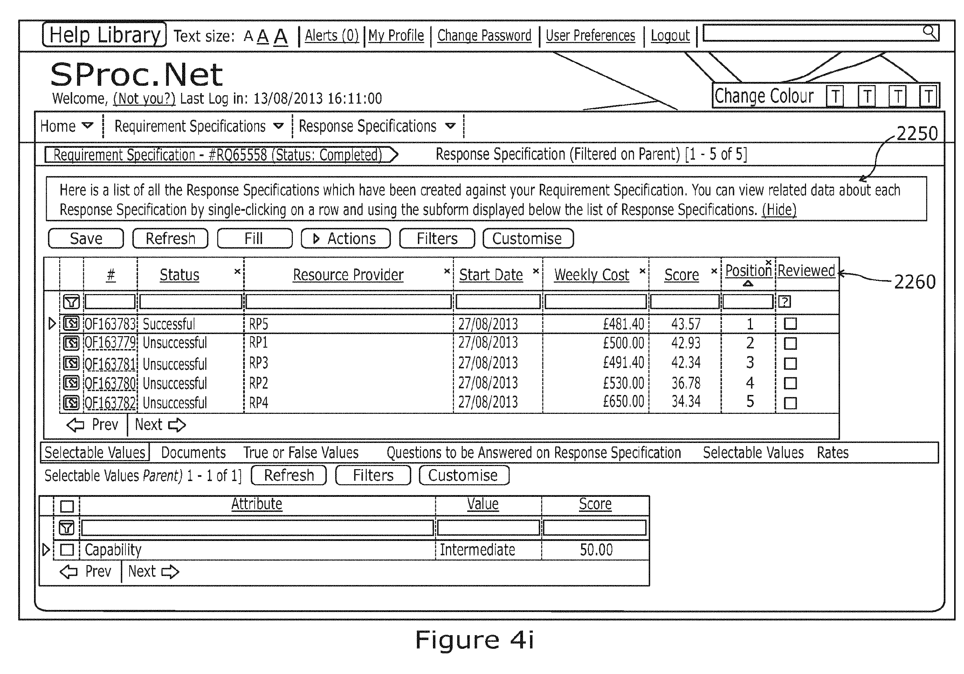

The overview of the complex multi-parameter search query process carried out by the search engine system 100 according to an embodiment of the present invention is now described with reference to **Figure 4**.

The complex multi-parameter search query process begins at Step 410, when a user via their user terminal 101, accesses the website 110 and creates a multi-parameter search query specification 104 using the existing templates 106 stored in the database 140. The templates 106 set out various different types of parameters which can be selected by the user and enable the user to construct a relatively detailed specification in a very simple and easy manner. These parameters form the basis against which response content specifications 108 are filtered and ordered as part of a scoring process. Furthermore, the templates 106 enable a specific scoring scheme 224 to be defined in relation to some of the user-selected parameters specified in the multi-parameter search query specification 104.

The detailed process followed by the user 101 in order to create, at Step 410, the multi-parameter search query specification 104 is now described. The types of information which the user is required to input to the templates 106 and the graphical user interface provided at the user terminal 101 are illustrated in **Figures 4a-4f** and the process is described in more detail below.

**Figure 4a** illustrates the initial stage of the creation of a multi-parameter search query specification 104, where some of the basic details are input to the search engine system 10 in order to enable the most appropriate template 106 to be selected. Various different types of templates 106 are stored in the database 140, each one being specific to a type of resource or resources which may be required by the user. The templates 106 have previously been created from knowledge of the parameters which are appropriate to a specific type of resource which is required by the user. The details which the user inputs into the web page displayed in **Figure 4a** include information such as the category of the resource 2000, the type of template 2010 to be used, and the geographical location 2020 of the user 101. Also it is possible in this embodiment for a justification field 2030 to be provided to record the reason why the user is creating the multi-parameter search query specification 104.

Turning to **Figure 4b**, the user 101 is asked to input some further details regarding the multi-parameter search query specification 104. A second entity field 2035 is provided which enables the user 101 to specify a second entity (by way of communications address) to be associated with the present multi-parameter search query specification 104. This means that the search engine system 100 then has to copy to the second entity all communications which are sent to the user 101. Also the second entity is permitted to perform any of the actions that the user 101 can perform and receives all of the same alerts. The advantage of this feature is that a user 101 and a designated second entity can share the process of creating a multi-parameter search query specification 104 and also any interactions which are required in the progression of the complex multi-parameter search query process.

The user completes the other fields provided, such as a written description 2040 summarising the multi-parameter search query specification 104, timing parameters such as a start date 2050 and an end date 2060 (the start date 2050 and end date 2060 define the time period during which, in this embodiment, a desired resource is required). The user 101 may also select whether they require a profile 2070 namely selected from a list of profile statements that each received response content specification 108 can be compared against. Also the user can select a tracking code 2080 for referencing this multi-parameter search query specification 104; this is useful when a plurality of different multi-parameter search query specifications 104 are generated for the same user 101. Alternatively, or in addition, they can simply be used as part of the overall scoring process, though this approach is least preferred. This approach may however be used if as a result of applying these parameters as filtering criteria, all of the response content specifications 108 have been filtered out (by not having the required binary parameters) before the scoring process commences.

Turning to **Figure 4c**, an example query specification template (106) and template components (106a) can be seen. The query specification template 106 and components 106a enable on/off parameters 221 to be defined by providing a list of binary variables 2100 which can be named in the free text field called attribute type 2102 by the user. Each binary (on/off) variable 2100 has an associated true or false value field 2105 which has to be set by the user for that on/off parameter 221. These on/off variables 221 set in this manner are preferably used as filtering criteria by the analysis module 350 when comparing received response content specifications 108 to a multi-parameter search query specification 104.

The query specification template 106 also enables variable parameters 222 of response content specifications 108 to be set up. In this embodiment, a first variable parameter is set up called 'capabilities' 2110 by naming its type 2112, and then its attribute 2114. Finally, a value 2116 for that variable parameter 2110 is selected from a drop-down list. The value can be set to be any of the values 'high', 'intermediate', 'low' or 'none'.

Similarly, a second variable parameter 222 is named 'qualifications' 2120 is set up by naming its type 2122, and then its attributes 2124. Finally, a value 2126 for that variable parameter 2120 is selected from a drop-down list. In this case the value can be set to be 'yes' or 'no' depending on whether the content provider 120 has those qualifications or not. The true or false value fields 2105 and the qualifications value field 2126 are *binary parameters,* as they define characteristics set out by the user 101 which the content provider 120 may or may not be able to provide. In this regard, they can be used for response content specification filtering by the search engine 135 as has been described above.

The template 106 also provides the ability to define a documents parameter 2130. The documents parameter, also known as a supporting evident parameter 226 in the multi-parameter search query specification 104, enables the user to define in a free text field a description 2132 of one or more documents 232 required as evidence in any response content specification 108. For example if a response content specification specifies a parameter requiring any a supplier of organic produce, the response content specification can have attached a latest certificate from an organic certification authority confirming that parameter. The description is labelled in a document name field 2134. In the description field 2132, the user may also specify whether they require these documents 232 to be sent with the response content specification 108.

Turning to **Figure 4d**, a slightly different template to that shown in **Figure 4c** is shown. This template 106 provides the ability to define all of the different types of parameters set out in the template 106 of **Figure 4c**. However, in addition a further more subjective type of parameter can be added, namely the open question parameter 2140. The open question parameter 2140 comprises a question field 2142 which is an open text field of up to 2000 characters. This enables the user 101 to specify a complex question or an open-ended question which requires the content provider 120 to respond in more than a simple binary response or a response selected from one of several predetermined answers in the response content specification 108. For each question field 2142 there is provided a weighting field 2144 which enables the user to assign a weighting to each question. The weighting can take the value of 1 to 10 and is used by the scoring engine 340 to score each response content specification 108 as will be described in detail later. Also the open question parameter 2140 comprises a sort order field 2146 which the user can set to define the order of importance of each of the plurality of questions which can be defined by the open question parameter 2140. The most important of the questions is ordered with a value of '1' and in this example the least important is ordered with a value of '3'.

Referring now to **Figure 4e**, the template 106 also enables the user to configure the response options. The template 106 comprises timing fields 2150, response handling fields 2160 and weighting fields 2170. Using the timing fields 2150, the user is given the opportunity to set the timeline for the entire process of finding and accepting a response content specification 108 to a multi-parameter search query specification 104. As mentioned earlier, the use of dates rather than seconds or minutes is in order to allow the system of the present embodiment to interface with slow and even manually-operated content provider terminals 120. In the ideal case of fully-automated content provider terminals 120, only the time fields may be used as the responses would be expected back on the same day. The timing fields 2150 enable the user 101 to set a response end date and time 2152, which is the point in time when the search engine system 100 ceases accepting response content specifications 108 from content providers. Once this first period of time has ended, the user 101 optionally has a period of time (user review period) to review the response content specifications 108 that have been shortlisted by the search engine system 100 and which require user review. These include all the response content specifications 108 that fulfilled at least the necessary criteria of the multi-parameter search query specification 104 but which may have open question parameters 2140, which the user 101 needs to review. Accordingly, the user 101 is required to complete a second date and time field 2154, which defines the end of this user review period.

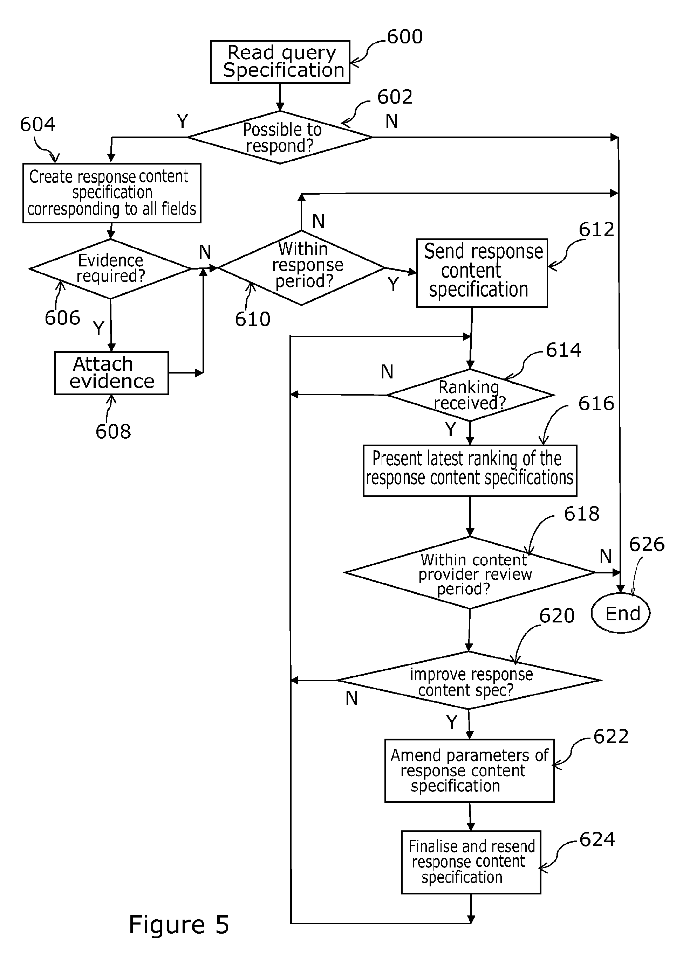

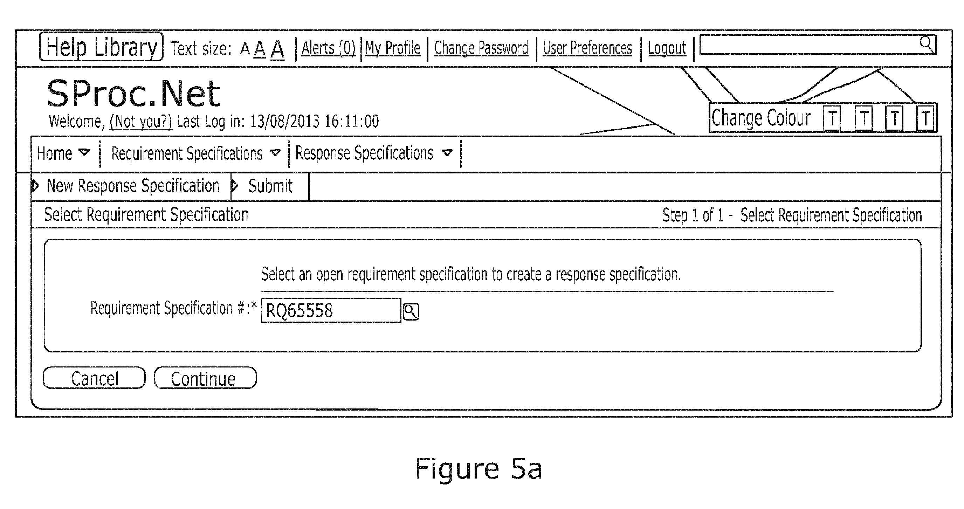

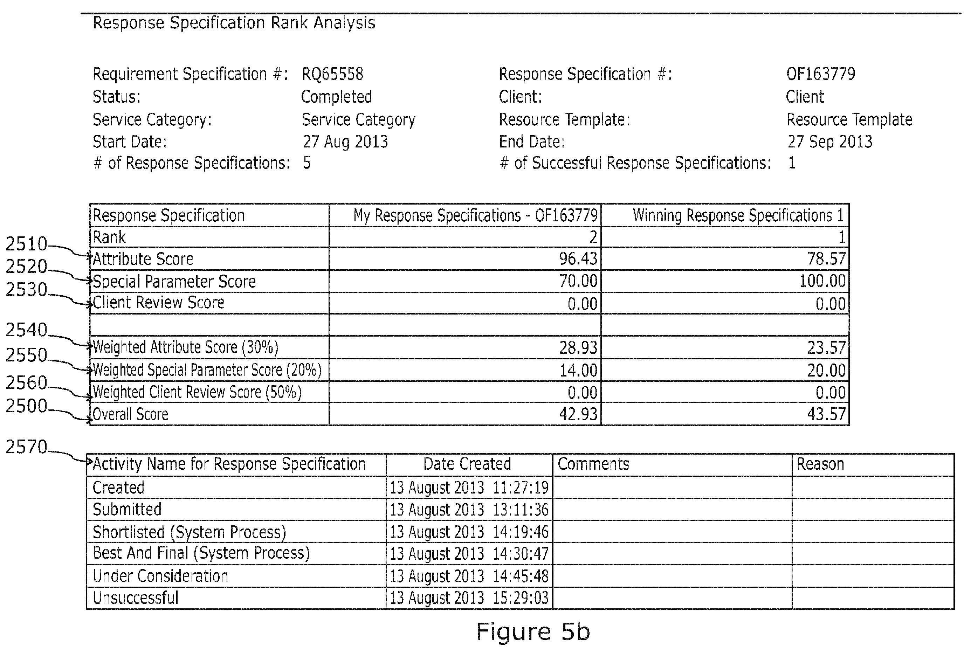

The user 101 can also optionally set a third date and time field 2156 which defines a content provider review end date 2156. This date defines an end of a period (content provider review period) in which the content providers 120 can review and modify their response content specification 108 once the results of the scoring of all response content specifications have been communicated back to them. This final time period enables content providers to modify any aspect of their response content specification 108 which may improve their position or ranking in the complex multi-parameter search query process to stand a better chance of being selected by the search engine system's automated selection process. The significance of the time window set by the content provider review end date 2180 will be described with more detail below, with reference to **Figure 5**.

The template also enables the user to set response handling fields 2160. A 'number of responses' field 2162 enables the user to define how many response content specifications 108 will be provided in a shortlist of response content specifications 108 to be provided to the user for review. This can be important as each result is complex and required a degree of review by the user. If too many are provided the user may have too much information to consider or may spend unnecessary time on less relevant content responses to the query. The value of the field is set by selecting a number from a drop-down list of possible values. Similarly, the user can also set the maximum number of response content specifications 108 which can be permitted to any multi-parameter search query specification 104 from a single content provider, using the maximum response content specifications field 2164, which is a number selected from a drop-down list of possible positive integer numbers.

Finally, the user 101 can set the weighting fields 2170, which enable the user to adjust the weighting applied to scoring results generated by the scoring engine 340 for each response content specification 108. The weighting fields 2170 enable the user 101 to adjust the importance of different characteristics of the multi-parameter search query specification 104. This is a useful feature as the selection of the best response content specification 108 is in this embodiment automated and is determined by the search engine 135 using the scoring results and the weighting parameters. There are three weighting fields: an attribute weight field 2172, a special parameter weight field 2174 and a user review weight field 2176. The sum of the values entered into these fields 2172, 2174, 2176 needs to equal the value 1.00 as each reflects a weighting portion of a whole applied to each different weighting field 2170. The attribute weight 2172 is a weighting applied to the overall scoring of the determinative parameters, namely the on/off parameters 221, such as the binary parameters 2100 and the qualifications parameters 2120, and the variable parameters such as the capabilities parameters 2110. The special parameter weight 2176 is a weighting applied by the user to a special parameter of their choice. For example, taking the non-limiting resource provision example, this special parameter could be number of hours required to provide resources (if speed of provision of services is the key criteria for the user), price of resources provision (if cost is the most important criteria for the user) or independent rating of content provider (if quality of content provider is the key criteria). The user review weight 2176 is a weighting applied by the user to the scoring of the open question parameters 2140. This is also important as it quantifies a subjective view of the received response content specification 108, which has been avoided previously as it has been perceived to be too difficult.

Once the user 101 has completed creating the multi-parameter search query specification using the templates 106 as per **Figures 4a-4e**, the user is presented with a final screen of the templates 106 as shown in **Figure 4f**. Here the user can confirm their selections and submit the multi-parameter search query specification 104 to the search engine system by selecting the 'confirm and submit' option 2180. Alternatively, by selecting the review and amend option 2182 the user can return to the multi-parameter search query specification 104 to review and amend the same.

Returning now to **Figure 4**, the multi-parameter search query specification 104 created by the user at Step 410 is subsequently stored at Step 420 in the database 140. Once the multi-parameter search query specification 104 has been stored, an alert is then broadcast, at Step 430, via the system events module 360, to all content providers 120 who are registered with the search engine system 100 using their contact details 212. Also the multi-parameter search query specification 104 is made available to all interested content providers 120 via the website 110. In certain embodiments the multi-parameter search query specification 104 can itself be broadcast for faster processing, particularly where the content providers 120 have more sophisticated systems for automatically responding with response content specifications 108.

The interested content providers 120 subsequently review the multi-parameter search query specification 104. If they wish to respond to the multi-parameter search query specification 104 with a response content specification 108, they firstly confirm that they agree to the terms and conditions of the search engine system 100 and then they prepare their response content specifications 108 and submit these to the search engine system, at Step 440. Alternatively a content provider 120 can simply decline to provide a response content specification 108 for this particular multi-parameter search query specification 104. In this embodiment, unpopulated blank response content specifications 108 can also be provided by the web server 110 to the content providers 120 as web pages that they have to fill in. The structure (format) of the blank response content specification 108 is determined by the parameters selected by the user 101 for the multi-parameter search query specification 104 and subsequently also takes a template form similar to that shown in **Figures 4a** to **4e**. Each received response content specification 108 is then stored in the database 140 in this user defined bespoke format and subsequently scored, at Step 450, by the scoring engine 340. The content providers 120 have an opportunity to submit their completed response content specifications 108 by the end of the response period as defined by the response end date 2152.

If the multi-parameter search query specification 104 includes open question parameters 2140, as shown in **Figure 4d**, the content provider 120 will have prepared text responses to those questions in the response content specification 108. This part of the response content specification 108 is sent, at Step 470, by the response content handling module 330 to the user terminal 101 for user review. (In other embodiments, although not preferred, it is also possible for the whole response content specification 104 to be sent to the user terminal 101 for user review.) The user 101 then has an opportunity to review the submitted answers until the end of the user review period, as defined by the review end date 2154. The user then provides a score, at Step 480, (typically between 1 and 10) for each of the answers that the content provider 120 has given. These additional scores are then sent at Step 490 to the response content specification handling module 330 at the search engine 135, where the additional scores are stored in the database 140 and added to the cumulative score of the response content specification 108 under review. When determining a final overall score for a response content specification 108, the scoring engine 340 can retrieve these additional scores from the database 140. In an alternative embodiment it is possible for the scoring of the submitted answers to be carried out entirely automatically by the scoring engine 340. Here the scoring engine would access a predetermined record (not shown) stored in the database 140 containing a list of key words which the user 101 has set up as being highly desirable in the text response and the highest score would be determined for the answer if all of the different keywords were found in the text response to the open question parameter 2140. Other techniques would also be possible for semantic processing of the text answer to the open questions as will be apparent to the skilled addressee. A similar approach can be used by the content providers in that semantic processing of the text question can lead to a text answer being generated at the content provider for use in the response content specification 108.

The scoring engine 340 then determines the complete score of the response content specification 108, which includes any additional scores given by the user 101 (or the semantic processing of the text answer by the scoring engine 340), and passes the scored results to the analysis module 350. Here the scored response content specifications 108 are possibly filtered and ranked, at Step 500. Any response content specifications 108 that do not fulfil the necessary criteria can be removed and the remaining response content specifications 108 are ranked using their relative scoring. Alternatively, in another embodiment, all of the response content specifications can be kept and ranked using their scoring (this would enable later revisions of the poorly ranked response content specifications by the content providers 120 to enable them to be better ranked). The ranking ay Step 500 involves applying the user-defined weighting to the scores of the different parameters, which make up the response content specification 108. Whilst, it is possible and reasonable to consider this to be the end of the search query process as the highest ranked response content specification 108 can be considered to be the best match to the multi-parameter search query specification 104, the process in this embodiment optionally continues in order to seek a further optimisation of the response content specifications 108 to provide an even better match. This is possible because the content providers 120 are given a further opportunity to adjust their submitted response content specifications 108 to better match the existing multi-parameter search query specification 104. This optional further optimisation assumers that the content providers are able to improve their response content specifications further. One example of this may be where a content provider failed to provide documents to evidence a particular feature, taking the example above, an organic certification of goods. The further optimisation provides an opportunity to correct missing information in the response content specification from a particular content provider to improve the response content specification scoring. This optimisation process forms the second part of the scoring process which is now described below.

After all of the submitted response content specifications 108 have been scored and ranked, the score of each submitted response content specification 108 is then made available or sent out, at Step 510, to all the corresponding content providers 120, together with the current position of the response content specification of that content provider in the rankings. This allows the content providers 120 to see their position in the rankings and to consider whether they wish to modify one of more parameters of their response content specification 108 to seek to improve its position within the rankings. For a content provider 120 who does which to change some of the parameters in the response content specification 108, these changes are made and the revised response content specification 108 is resubmitted to the search engine system 100. The revised response content specifications 108 are then received and stored, at Step 520, and, if at Step 530, any of those are found to have been modified (a confirmation that the received response content specification 108 has actually been modified), they are rescored, at Step 540, by the scoring engine 340. The rescoring takes the same form as that previously described in Steps 450 to 490, namely with the score of the revised response content specification 108 being recalculated and thereafter the ranking of the revised response content specification 108 being determined again. These rescored and re-ranked values are stored in the database 140. Any received revised response content specifications 108, which are found to actually be the same as the previously submitted response content specifications 108, are not rescored and an error message is simply generated and sent back to the content provider 120. In practice, the scoring and weighting is transparent and so the content provider 120 is made aware of the weightings, which the user has applied to the different parameters of the response content specification and also what the special parameter is. Accordingly, the content provider 120 may only choose to modify selectively (for example the special parameter) to get a disproportionate improvement in the score of their response content specification.

The content providers 120 have a fixed period of time to consider the results of their previous submissions and respond with a revised query specification 104. This time period is determined by the content provider review end date 2156, which is one of the timing fields 2150 in the multi-parameter search query specification 104. If the content provider review period (defined by the end date 2150) has not expired, at Step 540, then the process loops back to Step 510 and the latest scored response content specification is sent out to all of the content providers 120 and Steps 520 to 550 are repeated. These steps continue during the content provider review period, namely whilst the content provider review end date 2156 has not been reached. Once the content provider review period has expired, at Step 540, the response content specifications (from both the originally submitted resource content specifications 108 and the resubmitted resource content specifications 108) with the highest scores are presented at Step 560 to the user 101 for consideration and selection. Alternatively, in another embodiment, the search engine system 100 can be set up to automatically accept at Step 560, the single highest scoring response content specification as the best result to the search query. The process then ends at Step 570.

An example of a content provider 120 modifying their response content specification 108 is now described in greater detail with reference to **Figures 4g** and **4h****.** In **Figure 4g**, a content provider 120 receives, at Step 510, an alert 2200. The alert 2200 sets out the overall score of the response content specification 2210 which in this example has a value of 40.85%, and a ranking position of the specification 2220 which in this example is 3^{rd} out of 5. Furthermore, important parameters to the scoring such as the special parameter 2225, which in this example is a 'supply bill' parameter, are also provided. The alert 2200 also provides the content provider 120 with all of the other parameters that were submitted in the response content specification 104 together with associated completed fields 2230 (for the binary parameters) and associated score fields 2240 which provide feedback as to how the submitted response content specification 108 was processed by the search engine system 100. Finally, a status 2245 of the response content specification 108 within a timeline set by the time periods is provided. The time periods in turn are defined by the dates 2150 set in the template 106.

The content provider 120 is able readily to amend the values of the displayed fields by simply overwriting the values or the answers previously provided in the original response content specification. This can be carried out either manually or in an automated manner, where previously-defined rules are provided at the content provider terminal 120 which enable a better response to be created in some situations. The revised response content specification 108 is then resubmitted by being sent to the search engine system 100 for reconsideration. The modified response content specification 108 is then rescored, at Step 530, at the scoring engine 340. The content provider 120 then again receives, at Step 510, the latest alert 2200 of the scoring (namely the rescoring and ranking results of the resubmitted response content specification 108). One example is seen in **Figure 4h** which continues from the example set out in **Figure 4g**. By comparing the alerts of **Figures 4g** and **4h**, it can be seen that the amendment that was made in the response content specification which was to reduce the supply bill parameter 2225 has increased the content provider's overall score 2210 to 43.57% and the content provider has achieved a ranking 2220 of 1^{st} of 5.

**Figure 4i** shows a typical example of a final ranking results page 2250, which is generated once the content provider review period has expired and the closest matching response content specification 108 has been determined and chosen automatically by the search engine system 100. The final ranking results page 2250 includes a summary table 2260 listing all of the final revised response content specifications 108 from each content provider 120. This final results ranking page 2250 is also made available to or sent to the content providers 120 who had submitted response content specifications 108, as will be described with more detail below.

Turning now to **Figure 5**, the complex multi-parameter search query process as experienced by a content provider 120 is now described in detail. The process commences with the content provider 120 receiving an alert generated by the system events module 360, regarding the availability of a new multi-parameter search query specification 104. The new multi-parameter search query specification 104 is then read by the content provider 120 (by logging onto the web site 110 and viewing the stored multi-parameter search query specification 104 if the search query specification 104 has not been sent out already as part of the alert), at Step 600. If the content provider 120 has the ability to provide relevant content to the multi-parameter search query specification 104 at Step 602, a response content specification 108 is created at Step 604. This involves the content provider 120 (either manually or automatically) completing all the fields required by the multi-parameter search query specification 104. In this regard, the content provider 120 is presented at Step 600 with a graphical user interface displaying a page similar to that provided by the templates 106 so that the relevant information can be input into the system for matching the required fields in a relatively easy manner. Population of these fields can be carried out in an automated manner or manually. If the content provider 120 does not have the ability to provide the required content for the new multi-parameter search query specification 104 as determined at Step 602, the process ends at Step 262.

If the multi-parameter search query specification 104 states that evidence is required as determined at Step 606, by consideration of the documents section 2130 of the multi-parameter search query specification 104, then the content provider 120 attaches at Step 608 the appropriate evidence documents 232 if these are available. Otherwise, this attachment step is skipped.

The process then continues with a determination, at Step 610, of whether the current date and time is within the response period, namely before the response end date 2152. If the response period has expired then the process ends at Step 626. Otherwise response period has not yet expired and the response content specification 108 is then sent, at Step 612 to the search engine system 100. This completes the submission of the response content specification 108 to the search engine system 100 for consideration in the complex multi-parameter search query process. The content provider 120 then awaits at Step 614, the next alert from the search engine system 100, that a ranking of the submitted response content specifications 108 has been carried out and the ranking results are provided. Once this alert has been received, this latest ranking of response content specifications 108 is presented at Step 616, to the content provider 120. Next a determination is carried out, at Step 618, to establish whether the current date and time is within the content provider review period, namely before the content provider review end date 2156. If the content provider review period has expired, the process ends at Step 626. Otherwise, the content provider 120 is given an opportunity, at Step 620, to revise their response content specification 108 to improve its scoring and hence ranking. If the content provider 120 does not wish to improve any aspect of their original response content specification 108 then the process moves back to waiting for the next alert from the search engine system 100. However, if the content provider 120 does wish to improve their previously submitted response content specification 108 to try to improve their overall score and hence their ranking, then they amend at Step 622, the value of one or more parameters in the response content specification 108 and then finalise and resend the revised response content specification 108, at Step 624, to the search engine system 100 for reconsideration (scoring and ranking). The process then continues with waiting, at Step 614, for the issuance of the next alert from the search engine system 100.

Turning to **Figure 5a**, a screenshot illustrating the graphical user interface presented on the content provider's terminal 120 after the content provider has been alerted to the generation of a newly-created multi-parameter search query specification 104 and is accessing the web site 110 to review and possibly create and submit a new response content specification 108 for that multi-parameter search query specification 104 (this again assumes that the content provider 120 was not sent the new search query specification 104 as part of the alert). Here the content provider 120 simply enters a query specification number 2400 of the multi-parameter search query specification 104 to access all of the relevant details and a blank response content specification 108 defined by the templates 106 and template components 106a. As has been described above, the content provider 120 has to agree to the terms and conditions of the search engine system 100 before they can submit a response to a specific multi-parameter search query specification 104.

Referring now to **Figure 5b**, a screenshot of the graphical user interface on the content provider's terminal 120 at the end of the process (namely at Step 626) of **Figure 5** is shown. Here it is assumed that for this response content specification 108, a modified response content specification 108 was submitted by the content provider 120 before the end of the content provider end review period. The screenshot is a feedback analysis screen which contains information with regards to the overall score 2500 and information on how that overall score 2500 was arrived at. This information takes the form of a breakdown of the components making up that overall score. These components comprise the attribute score 2510 (namely the score of the binary and variable parameters), the special parameter score (the score attributed to the most important (special) parameter) 2520, the user review score (namely the open question parameter score) 2530. These parameter values are provided for both the best matching and therefore accepted response content specification 108 and the respective content provider's response content specification 108.

Furthermore, the weighting parameters as selected by the user 101 and applied in the scoring of the response content specifications 108 are also shown broken down by attribute score weighting 2540, special parameter weighting 2550 and user review weighting 2560. The feedback analysis screen also provides a history of events 2570 to show the content provider the time and dates of each event along the process. Whilst this feedback is not strictly necessary, it is advantageous in that it shows all of the content providers exactly how content was ranked and enables the content providers to improve the way in which they respond and provide content to the search engine system such that the quality of the results can be improved overtime.

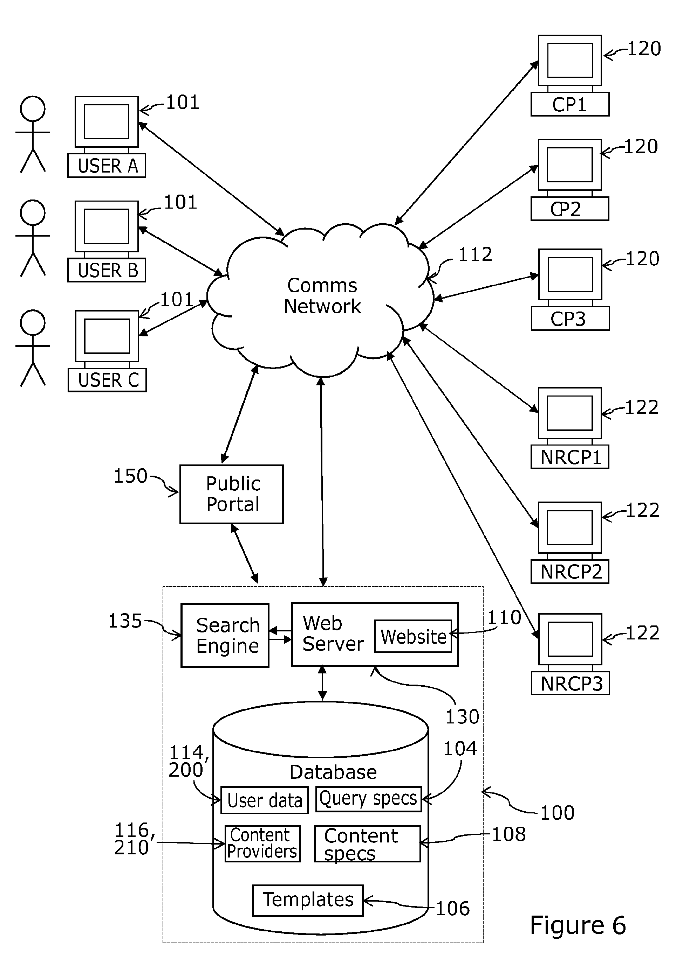

Another embodiment of the present invention is now described with reference to **Figure 6**. This embodiment is very similar to the previously described embodiments and so the features which are the same are not described further. However, the differences which provide specific functionality are described below.

**Figure 6** is similar to **Figure 1** in that it includes a plurality of content providers 120 who have information about them stored in the database 140 but additionally includes a plurality of non-registered content providers 122 who have no information about them stored in the database 140. Each of the non-registered content providers has capabilities which are unknown to the search engine system 100. In addition, this embodiment provides a public portal 150 which provides the ability for information stored in the database 140 to be made available publically. The public portal 150 is connected via the search engine 135 to the database 140 in order to access this subset of stored information. In particular, data relating to the multi-parameter search query specifications 104 and the results of scoring and ranking of response content specifications are made available via the public portal 150.

The overall function of this embodiment is to enable any party (the non-registered content providers 122 in this embodiment) accessing the public portal 150 to be able to observe, some of the details of the complex multi-parameter search query process occurring in the search engine system 100. It is not necessary for there to be any information about the observing non-registered content provider 122 available in the database 140 and so summary information pertaining the process of providing a multi-parameter search query specification 104 and subsequently selecting one or more submitted response content specifications 108 which best match that multi-parameter search query specification 104 is made available to these observing non-registered content providers 122. The non-registered content provider 122 is also able to query the public portal 150 using specific parameters to find multi-parameter search query specifications 104, which they can respond to (for example multi-parameter search query specifications 104 having a specific geographical location or a specific current status which the non-registered content providers comply with). In addition, if the observing non-registered content provider 122 is able to respond to a specific multi-parameter search query specification 104, they are provided with an opportunity to register with the search engine system 100 and then submit a response content specification 108 to the search engine system 100 assuming that they are within the specified time limits to respond. Accordingly it is to be appreciated that this embodiment works best when there is at least one other content provider 120 who needs to respond manually to the search query specification such that there is likely to be enough time for a non-registered content provider 122 to register and respond. However, it is also possible for the watching the public portal and the registration to be automated in the case of a non-registered content provider 122.

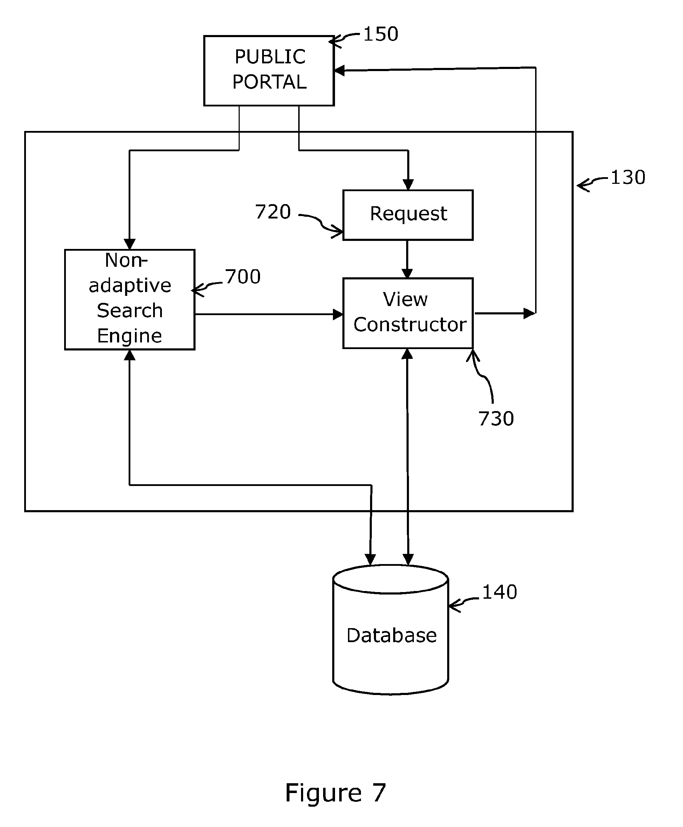

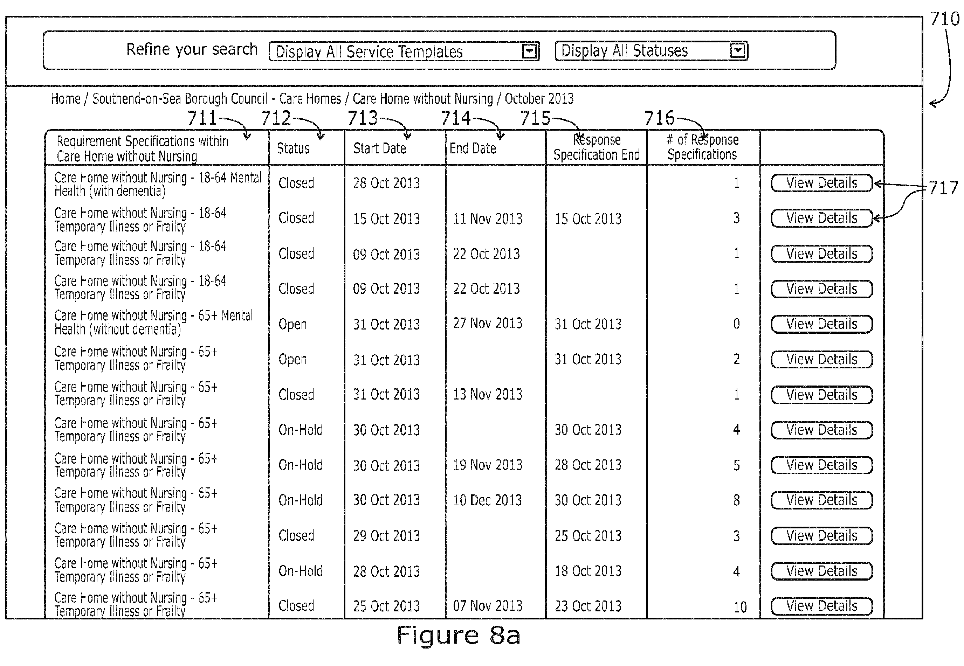

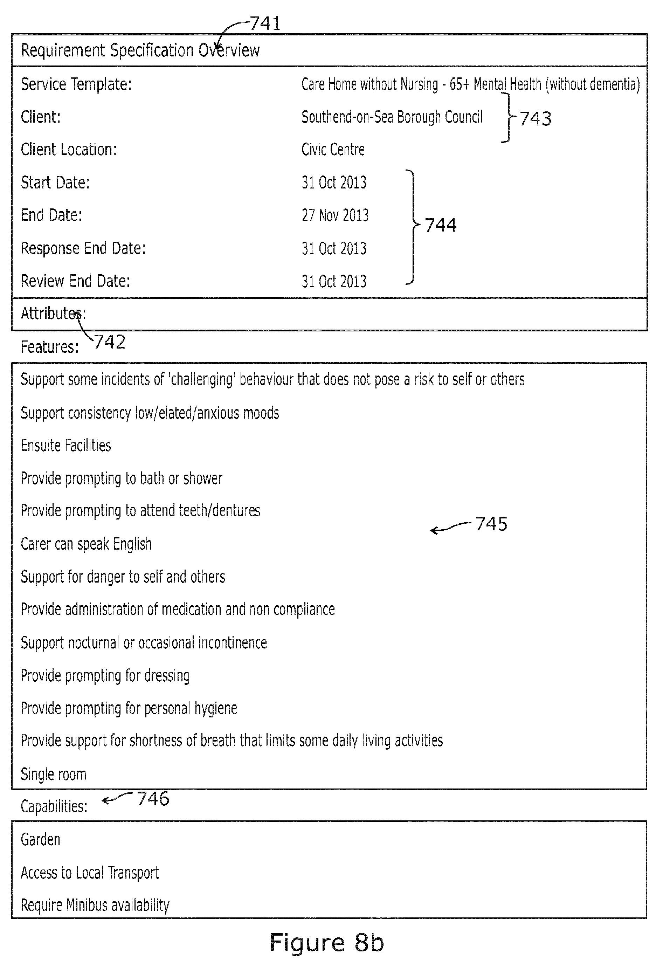

Referring now to **Figure 7**, the structure of the web server 130 in the present embodiment is shown. The web server 130 comprises a conventional search engine 700 for searching the database 140 to find a relevant plurality of multi-parameter search query specifications 104. The results of the search in the form of a tabulated web page 710 are returned to the public portal 150 for presentation to the non-registered content provider 122 (as shown in **Figure 8a** - described later). A request generator 720 is also provided for creating a request to view details of a specific one of the plurality of response content specifications 108 which have been returned by the conventional search engine 700. On receiving the request, the request generator 730 instructs a view constructor 730 to retrieve the specific query details from the database 140 and a construct a view 740 (shown in **Figure 8b**), which provides the details of the selected multi-parameter search query specification 104.

Referring to **Figure 8a**, a non-limiting example of the web page 710 in the field of care home provision is provided. Here the non-registered content provider 122 is provided with the tabulated web page 710 as a result of a search on the database 140 for care services close to a specified geographic location. As can be seen, the results in this example are provided in a table with an overview column 711 of the multi-parameter search query specifications 104, a status column 712 of the multi-parameter search query specifications which can either be 'open' or 'closed', a start date column 713 indicating the start date for the query, an end date column 714 indicating the end dates for the query, an response date column 715 listing the response end date and times 2152 for each of the multi-parameter search query specifications 104, and a number of responses column 716 indicating how many responses have been received from registered content providers 120 in relation to that multi-parameter search query specification 104. Furthermore, a further information request generation button 717 is provided on the web page 710, which enables greater detail to be retrieved from the database 140 using the request constructor 720 and view generator 730.

Referring to **Figure 8b**, a non-limiting example of the web page 740 derived from selecting a further information request generation button 717 in **Figure 8a** is shown. The web page 740 comprises a query specification overview 741, and an attributes section 742. The overview section 741 includes information 743 about the user 101 and the timing information 744, which includes the start and end dates, and the response end date and time 2152 and the end of the user review period 2154.

The attributes section 742 includes a list of the binary features set out in the multi-parameter search query specification 104 which the unregistered content provider 122 would need to be able to provide in any submitted response content specification 108. Also a capability section 746 is provided which lists the required capabilities to which the unregistered content provider 122 would need to provide evidence to support the response content specification 108.

This availability of this detail in the web pages 710 and 740 allows a plurality of non-registered content providers 122 to browse each multi-parameter search query specification 104 that is of relevance to them and if any multi-parameter search query specification 104 can be responded to, they can register and submit a response content specification 108 accordingly. The present embodiment enables a view of the inner workings of the complex multi-parameter search query process to be provided to non-registered users via the public portal 150 which makes the complex multi-parameter search query process more transparent than has been the case previously. It also enables the pool of potential content providers 120 to be broadened as content providers 120 can observe the complex multi-parameter search query process in action before committing to becoming a registered content provider 121.

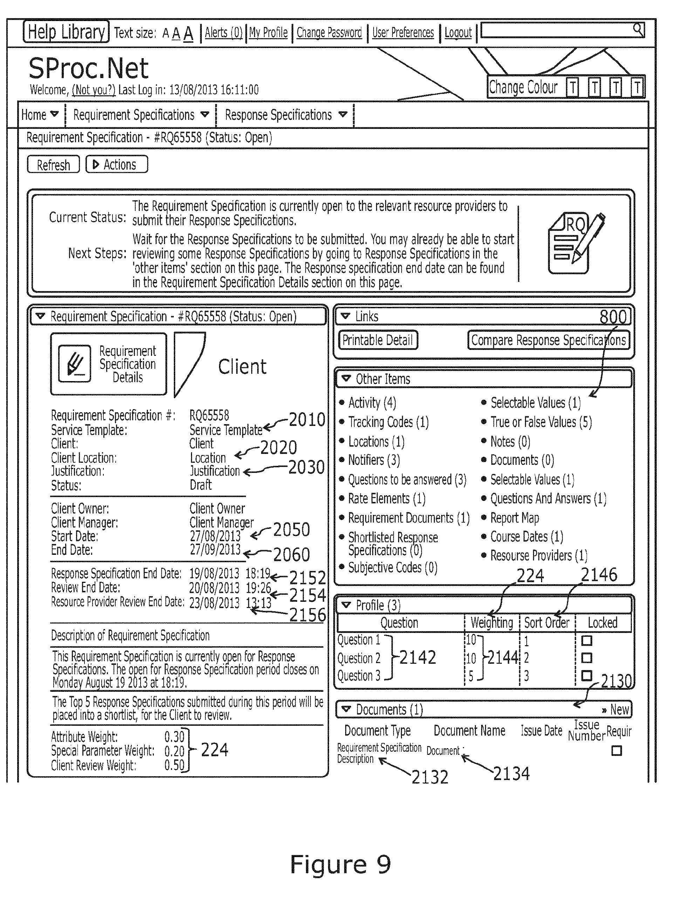

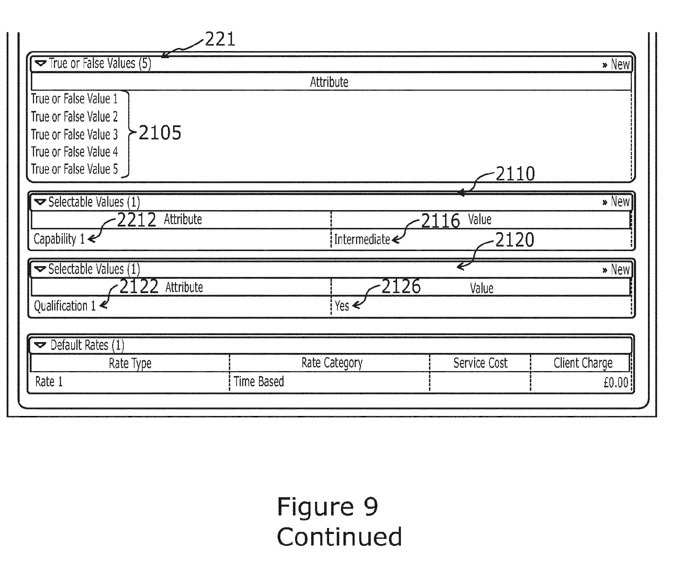

Referring now to **Figure 9**, an example of a multi-parameter search query specification summary page 800, which is shown to a registered content provider 121 is shown. The multi-parameter search query specification summary page 800 shows greater detail than that shown to non-registered content providers 122 in **Figure 8b**. Most of the elements which are shown have been previously described with reference to the earlier embodiment and so do not need to be described further. For example the summary page 800 shows the weighting 224 attributed to different categories of questions and the weighting 2144 attributed to the open-ended questions 2142, for example. The actual score 2210 generated by each response content specification 108 and ranking 2220 can also be shown in the summary page 800, but in the current screen shot of **Figure 9** this is not shown as the period for submissions of response content specifications 108 has not yet ended in this example. The public portal 150 can be arranged to provide a tabulated real-time view of a plurality of different search query processes being run concurrently at the search engine 135 to enable the view to be provided to a non-registered user terminal 122.

As has been mentioned previously, the system can further comprise a conventional search engine 700 arranged to enable searching of the database 140 comprising the multi-parameter search query specifications 104 and response content specifications 108 according to a user-specified search criteria, and a view constructor 720 which is arranged to read the multi-parameter search query specification 104 and response content specifications 108 stored in the database 140 and the results of any scoring and to create the single real-time view 740.

Having described various embodiments of the present invention it is to be appreciated that the present invention is not limited to these embodiments and that modifications and variations as determined by the skilled person will also be part of the invention as determined by the spirit and scope of the invention as determined by the appended claims. For example, whilst the user and the content providers may be realised with a combination of terminals and human interaction, it is also possible for at least the content provider 120 to be realised as a fully automated system. The manner in which such a system would be implemented is by the use of a state machine at the content provider terminal, which would sense the specific parameters in the multi-parameter search query specification 104 and take the appropriate action to prepare and submit a response content specification 108 highlighting the capabilities of the content provider 120. Such capability information would be obtained from a database accessible by the content provider terminal and which contained the required content provider capability data. This may also be a real-time updated database, which always provided a view of currently available resource capability of the content provider from a constantly changing amount of available resources.

## Claims

1. A user-configurable search engine system (100) for executing a complex multi-parameter data search in accordance with a search query specified at a remotely-located user terminal (101), the search engine system comprising:
A plurality of stored query construction components (106, 107) including a plurality of different user-configurable query templates (106);
A query construction module (310) for providing user access to the query construction components (106,107) enabling a user at the remotely-located terminal (101) to construct a complex user-defined multi-parameter search query (104) having a bespoke user-selected format;
A query pre-processing module (110) for transmitting the user-defined multi-parameter query to a plurality of content providers (120);
A response collator (330) for collating a plurality of received content responses (108) to the multi-parameter query (104) from the plurality of content providers (120); wherein the plurality of received content responses correspond in format to the bespoke user-defined format of the multi-parameter query (104) and the response collator (330) is arranged to populate a content database (140) with the plurality of content responses (108) in the user-selected format;
A database query engine (320) for searching the content database (140) for content responses (108) matching the user-defined multi-parameter query (104) and for returning to the user terminal (101) a set of results of the content responses corresponding to the multi-parameter query (104) that are ranked in order of degree of matching to the query (104).

2. The search engine system of Claim 1, wherein the query construction module (310) is arranged to present a plurality of predetermined templates to the user for selection, each template having a different query format and having a plurality of user-configurable fields.

3. The search engine system of Claim 1 or 2, wherein the query construction module (310) is arranged to enable user specification of binary parameters (221), variable parameters (222), and open question parameters (223).

4. The search engine system of any of Claims 1 to 3, wherein the query construction module (310) is arranged to enable user-specification of a scoring scheme (224) including a user-specified weighting (2170) assigned to each group of parameters.

5. The search engine system of Claim 4, further comprising a scoring engine (340) for applying scoring, in accordance with the scoring scheme (224), to different parameters of the plurality of received content responses (108), and the database query engine (320) being arranged to use the user-determined scoring in the ranking of the set of results to the query (104).

6. The search engine system of Claim 5, wherein the scoring engine (340) is arranged to score each of the parameters (221, 222, 223) of each content response (108) against a corresponding parameter of the search query specification (104) using the scoring scheme (224), the scoring engine (340) being arranged to apply the user-specified weighting (2170) to each of the parameters (221, 222, 223) to determine an overall score each content response (108).

7. The search engine system of Claim 5 or 6, wherein the query construction module (310) is arranged to enable user specification of open question parameters (223) and the scoring engine (340) is arranged to send a received content response (108) to the user terminal (101) to score open question parameters.

8. The search engine system of any of Claims 5 to 7, wherein the scoring engine (340) is arranged to score a special parameter with its own weighting value defined in the weighting scheme (2170) in the template (106).

9. The search engine system of any of Claims 5 to 8, wherein the response collator (330) and the query pre-processing module (110) are arranged to resend initially-scored content responses (108) to content provider terminals (120) to enable adjustment of the content responses (108) and to receive adjusted content responses (108), the scoring engine (340) being arranged to rescore the adjusted content responses (108) to enable determination of the highest and the scoring engine (340) is arranged to recalculate the set of results from the original and adjusted content responses (108).

10. The search engine system of any preceding claim, wherein the query pre-processing module (110) is arranged to publicise scoring, weighting and ranking results for all content responses to all content provider terminals (120) having data (210) provided in the database (140).

11. The search engine system of any preceding claim, wherein the query pre-processing module (110) is arranged to enable, at the user terminals (101), the definition of time periods in the user-defined multi-parameter search query (104) for the progress of complex multi-parameter data search.

12. The search engine system of Claim 11, further arranged to use the defined time periods to control periods of time when content responses (108) and user-defined multi-parameter queries (104) can be received by the search engine (135).

13. The search engine system of Claim 12, further comprising alert means (360) for alerting the user terminals (101) and content provider terminals (120) when a user-defined multi-parameter search query (104) is created and when a given time period specified in a query (104) is about to expire.

14. The search engine system of any of Claims 1 to 13, wherein the processing engine (135) is arranged to use the binary parameters (221) of the search query (104) as a set of filters to filter out any content responses (108) which do not have values corresponding to the values of the binary parameters (221) in the search query (104).

15. A search method for executing complex multi-parameter data searches in accordance with queries, the search method comprising:
providing a plurality of stored query construction components (106, 107) including a plurality of different user-configurable query templates (106);
providing user access to the query construction components (106,107) to enable a user at a remotely-located user terminal (101) to construct a user-defined multi-parameter search query (104) having a bespoke user-selected format;
transmitting the user-defined multi-parameter query to a plurality of content providers (120);
collating a plurality of received content responses (108) to the multi-parameter query (104) from the plurality of content providers (120); wherein the plurality of received responses correspond in format to the bespoke user-defined format of the multi-parameter query (104) and the collating step includes populating a content database (140) with the plurality of content responses (108) in the user-selected format;
searching the content database (140) for content responses (108) matching the user-defined multi-parameter query (104); and
returning to the user terminal (101) a set of results of the content responses corresponding to the multi-parameter query (104) that are ranked in order of degree of matching to the query (104).
